# EUROPÄISCHE PATENTSCHRIFT

(11) **EP 1 320 693 B1**
(45) Veröffentlichungstag und Bekanntmachung des Hinweises auf die Patenterteilung: **07.11.2007**
(21) Anmeldenummer: 01974037.2
(22) Anmeldetag: 14.09.2001
(51) Int. Cl.: F16C 39/06, H02K 7/09

(54) **MAGNETLAGER**
MAGNETIC BEARING
PALIER MAGNETIQUE

(30) Priorität: 26.09.2000 DE 10047583
(43) Veröffentlichungstag der Anmeldung: 25.06.2003
(73) Patentinhaber: SIEMENS AKTIENGESELLSCHAFT, 80333 München (DE)
(72) Erfinder: RIES, Günter, 91056 Erlangen (DE); STEINMEYER, Florian, 91074 Herzogenaurach (DE)
(86) Internationale Anmeldenummer: PCT/DE2001/003539
(87) Internationale Veröffentlichungsnummer: WO 2002/027204

(56) Entgegenhaltungen:
- US-A- 5 633 548
- US-A- 5 640 887
- US-A- 5 763 971

## Beschreibung

Die Erfindung bezieht sich auf ein Magnetlager.

Magnetische Lager erlauben eine berührungs- und verschleißfreie Lagerung von bewegten Teilen. Sie benötigen deshalb keine Schmiermittel und können reibungsarm konstruiert werden. Sogenannte aktive Magnetlager mit Elektromagneten benötigen eine aktive Lageregelung, die über Lagesonsoren und einen Regelkreis die Ströme der Tragemagnete steuert und Abweichungen des Rotorkörpers aus seiner Soll-Lage entgegenwirkt. Sogenannte passive Magnetlager stabilisieren dagegen ihre Lage selbsttätig, so dass keine aktive Lageregelung notwendig ist.

Aus der US 4 072 370 A ist eine passive magnetische Lagerung bekannt mit einer Anordnung von Permanentmagneten sowohl am Stator als auch am Rotor.

Ferner sind passive Magnetlager bekannt, bei denen nur eines der Lagerteile mit permanentmagnetischen Elementen gebildet ist und das andere Lagerteil einen Supraleiter umfasst. Die permanentmagnetischen Elemente induzieren bei einer Lageänderung als Folge von Feldänderungen in dem Supraleiter Abschirmströme. Die resultierenden Kräfte können abstoßend oder anziehend sein, sind aber immer so gerichtet, dass sie der Auslenkung aus der Soll-Lage entgegenwirken. Somit kann eine inhärent stabile Lagerung erreicht werden und eine aufwendige und störanfällige Regelung entfallen. Es ist aber eine Kühlung des Supraleitermaterials erforderlich. Magnetlager mit Supraleiter sind beispielsweise in US 5 196 748 A und EP 0 322 693 A beschrieben.

Aus der DE 44 36 831 C2 ist nun ein weiteres passives Magnetlager mit einem Hochtemperatur-Supraleiter bekannt. Dieses bekannte Magnetlager umfasst ein erstes Lagerteil, das mit einer Rotorwelle verbunden ist, und ein zweites Lagerteil, das an einem Stator angeordnet ist und das erste Lagerteil umgibt. Eines der beiden Lagerteile weist den Hochtemperatur-Supraleiter auf. Das andere Lagerteil umfasst eine Anordnung von nebeneinander angeordneten permanentmagnetischen Elementen. Die Magnetisierung benachbarter permanentmagnetischer Elemente ist entgegengesetzt zueinander. Die Zwischenräume zwischen jeweils zwei permanentmagnetischen Elementen sind mit ferromagnetischem Material ausgefüllt zur Konzentration des aus den permanentmagnetischen Elementen austretenden Magnetflusses an der dem anderen Lagerteil zugewandten Seite. Man erhält dadurch eine hohe Lagersteifigkeit (Stabilität).

In einer Ausgestaltung gemäß der DE 44 36 831 C2 sind die Permanentmagnete in hohlzylindrischer Anordnung am inneren Lagerteil vorgesehen und der Supraleiter ist als hohlzylindrische Struktur an der Innenseite eine hohlzylindrischen Trägerkörpers des äußeren Lagerteils angeordnet. Im Trägerkörper sind Kühlkanäle zum Durchleiten von flüssigem Stickstoff zur Kühlung des Supraleiters ausgebildet. In einer anderen Ausgestaltung ist der Hochtemperatur-Supraleiter am inneren Lagerteil an der Rotorwelle angeordnet, wobei zur Kühlung des Hochtemperatur-Supraleiters ein Kühlkanal in der Rotorwelle für den flüssigen Stickstoff vorgesehen wird. Die permanentmagnetischen Elemente mit den ferromagnetischen Zwischenelementen können axial zur Rotorwelle hintereinander in Form von dünnen Ringen angeordnet sein oder auch axial langgestreckt sein und in Umfangsrichtung hintereinander angeordnet sein, jeweils mit alternierenden Magnetisierungen.

Als permanentmagnetisches Material wird in der DE 44 36 831 C2 ein Material mit einem Energieprodukt (B*H)ₘₐₓ von wenigstens 20 MGOe vorgeschlagen, insbesondere eine Neodym(Nd)-Eisen(Fe)-Bor(B)-Legierung oder eine Samarium(Sm)-Kobalt(Co)-Legierung. Auch das permanentmagnetische Material kann zur Erhöhung seiner Koerzitivfeldstärke gekühlt werden.

Die in den bekannten Magnetlagern zum Erreichen der hohen Magnetfelder eingesetzten permanentmagnetischen Materialien sind selbst erheblichen Kräften durch die hohen Magnetfelder ausgesetzt. Bei Anordnung der Permanentmagnete am drehenden Lagerteil wirken zusätzlich Fliehkräfte (Zentrifugalkräfte) auf die Permanentmagnete. Diese Kräfte können nun zum Ablösen einzelner Magnetpartikel, insbesondere aus den pulvermetallurgisch durch Sintern oder Pressen hergestellten, spröden Permanentmagneten oder sogar zum Bruch der Permanentmagneten führen, insbesondere bei Dauerbelastung und Materialermüdung. Dies kann aber erhebliche Schäden oder sogar die völlige Zerstörung des Magnetlagers nach sich ziehen.

Aus EP 0 728 956 A1 ist nun ein Magnetlager bekannt mit einem Supraleiter auf dem Stator und einer Permanentmagnetanordnung auf dem Rotor sowie einem Lagerspalt zwischen dem Supraleiter und den Permanentmagneten. Die Permanentmagnete sind ringförmig ausgebildet und konzentrisch zur Rotationsachse des Rotors angeordnet. Zwischen den einzelnen ringförmigen Permanentmagneten sind ringförmige, weichmagnetische Flussleitelemente vorgesehen. Die ringförmigen Permanentmagnete sind dagegen aus einem magnetischen Sintermaterial mit einem hohen Energieprodukt, insbesondere einem Samarium-Kobalt- oder einem Neodym-Eisen-Bor-Magnetmaterial, gebildet. Um einen Bruch dieser gesinterten Permanentmagnete zu verhindern, insbesondere bei hohen Rotationsgeschwindigkeiten, ist nun um den äußersten Ring der Magnetanordnung ein Verstärkungsring aus einem glasfaser- oder kunststofffaserverstärkten Kunststoff angeordnet, der die Anordnung der ringförmigen Permanentmagnete radial unter einem radialen Druck zusammenhält.

Eine ähnliche Anordnung ist auch aus *Patent Abstracts of Japan* zu JP 09 049 523 A bekannt.

Aus EP 0 413 851 A1 ist ein Lagerring für Magnetlager zur Verwendung in magnetgelagerten Vakuumpumpen bekannt mit Permanentmagnetanordnungen auf dem Rotor und dem Stator. Als Permanentmagnete werden Eisen-Neodym-Bor-Magnete oder Kobalt-Samarium-Magnete vorgeschlagen. Dieses bekannte Magnetlager umfasst auf der rotierenden Welle Lagerringe, welche jeweils aus einem Nabenring, einem Permanentmagnetring und einem Armierungsring bestehen. Die Armierungsringe haben die Aufgabe, Zerstörungen der Permanentringe infolge der hohen Fliehkräfte zu vermeiden und bestehen aus Edelstahl.

Aus *Patent Abstracts of Japan* zu JP 08 200 368 A ist ferner ein Magnetlager mit einem Supraleiter am außenliegenden Stator und einer Permanentmagnetanordnung am innenliegenden Rotor bekannt. Die Permanentmagnetanordnung besteht aus mehreren in Umfangsrichtung nebeneinander liegenden, ringsegmentförmigen Permanentmagneten, die einander zu einem geschlossenen Ring ergänzen. Um die äußere Peripherie aller ringsegmentartigen Permanentmagnete ist ein Haltering angeordnet, um ein Brechen der Permanentmagnete durch die großen Zentrifugalkräfte bei hohen Drehgeschwindigkeiten zu vermeiden. Ferner ist ein Druckring vorgesehen, der den Haltering radial nach innen gegen die Außenflächen der Permanentmagnete drückt. Die Permanentmagnete sind nicht voneinander beabstandet, sondern berühren einander. Flussleitelemente zwischen den Permanentmagneten sind nicht vorgesehen.

Bei den genannten bekannten Magnetlagern, bei denen radiale Halteeinrichtungen für die Permanentmagnete vorgesehen sind, werden jedoch die Lagertragkräfte oder die Tragfähigkeit des Lagers verringert. Die radialen Halteeinrichtungen sind nämlich bei den bekannten Magnetlagern zwischen den Permanentmagneten und ggf. den zugehörigen Flussleitelementen einerseits und dem Lagerspalt andererseits angeordnet und reduzieren dadurch die in dem Lagerspalt und mit dem Supraleiter wirksame magnetischen Flussdichte, da der Lagerspalt eine bestimmte Mindestweite nicht unterschreiten darf.

Ausgehend vom nächstkommenden Stand der Technik gemäß US-A-5 763 971 (siehe Oberbegriff des vorliegenden Anspruchs 1) liegt der Erfindung die Aufgabe zugrunde, das Magnetlager vor einer Zerstörung oder Beschädigung der Permanentmagnete zu schützen, ohne die Lagertragkraft wesentlich zu schwächen.

Diese Aufgabe wird gemäß der Erfindung gelöst mit den Merkmalen des Anspruchs 1.

Das Magnetlager (magnetische Lager) gemäß Anspruch 1 umfasst wenigstens ein inneres Lagerteil und wenigstens ein äußeres Lagerteil, das das innere Lagerteil umgibt. An einem der beiden Lagerteile sind wenigstens ein Permanentmagnet, insbesondere aus hartmagnetischem Material, und wenigstens ein Flussleitelement zum Leiten des Magnetflusses des Permanentmagneten angeordnet. Das Flussleitelement ist axial (oder: parallel) zur Rotationsachse neben (oder: versetzt zu) dem Permanentmagneten angeordnet, und besteht im Allgemeinen aus magnetisch leitendem, insbesondere weichmagnetischem und/oder ferromagnetischem, Material. An dem anderen der beiden Lagerteile ist dagegen wenigstens ein Kopplungsmittel (Wechselwirkungsmittel) angeordnet, das mit dem oder den Permanentmagneten derart (magnetisch) wechselwirkt, dass zwischen dem inneren Lagerteil und dem äußeren Lagerteil ein um die Rotationsachse verlaufender Lagerspalt (Lagerabstand, Lagerzwischenraum) bildbar oder gebildet ist, so dass eine berührungsfreie Rotation der beiden Lagerteile gegeneinander um eine Rotationsachse möglich ist.

Eine radiale Halteeinrichtung (Schutzeinrichtung, Abschirmeinrichtung) hält und stabilisiert den Permanentmagneten in wenigstens einer radialen Richtung senkrecht zur Rotationsachse, zumindest jedoch zum Lagerspalt hin, und hält dadurch den Permanentmagneten oder Bruchstücke des Permanentmagneten von einer Bewegung in dieser radialen Richtung zum Lagerspalt hin ab. Durch die radiale Halteeinrichtung ist der Permanentmagnet somit zum Lagerspalt hin abgeschirmt und kann dadurch in dieser radialer Richtung keine Bruchstücke oder Partikel mehr abgeben. Somit kann der Permanentmagnet auch unter dem Einfluss starker Kräfte, insbesondere infolge hoher Magnetfelder oder hoher Zentrifugalkräfte, und einer dadurch möglichen Auflösung oder Ablösung von Partikeln keine Schädigung des Magnetlagers mehr hervorrufen.

Um die Lagertragkraft des Magnetlagers nicht zu reduzieren, sind nun als weitere Maßnahmen zum einen jeder Permanentmagnet in radialer Richtung zumindest zum Lagerspalt hin weniger weit ausgedehnt als das oder die Flussleitelemente und zum anderen die radiale Halteeinrichtung mit jeweils einem einzelnen Halteelement für jeden Permanentmagneten gebildet.

Gemäß der Erfindung ist also die radiale Halteeinrichtung zwischen dem Lagerspalt und dem Permanentmagneten angeordnet und damit der besonders störsensible Bereich des Lagerspaltes durch die radiale Halteeinrichtung vor Bruchstücken und abgelösten Teilen des Permanentmagneten geschützt. Jedes Flussleitelement dient zum Leiten des magnetischen Flusses der Permanentmagnete sowie im Allgemeinen auch zu dessen Konzentration und Verstärkung im Lagerspalt. Die Lagertragkraft wird durch die Halteeinrichtung gemäß der Erfindung nur geringfügig betroffen. Zum einen sind nämlich die Permanentmagnete zurückversetzt und ragen somit die Haltelemente nicht oder nur wenig in den Lagerspalt, so dass der Lagerspalt deshalb nicht größer gewählt werden muss. Zum anderen führen oder leiten die Flussleitelemente den Magnetfluss auch der zurückversetzten Permanentmagnete weiterhin in praktisch gleicher Stärke zum Lagerspalt hin. Die Tragkraft des Lagers entsteht nun überwiegend im Bereich der hohen Magnetflussdichte und Magnetflussdichtegradienten radial außen an den Flussleitelementen. Die im Bereich des oder der Permanentmagnete vorgesehene radiale Halteeinrichtung stört nicht den Magnetfluss an diesen Austrittsstellen an den Flussleitelementen. Die Erfindung beruht dabei auch auf der Überlegung, dass eine Stabilisierung der Flussleitelemente entfallen kann, weil die Flussleitelemente mechanisch stabiler ausgeführt werden können als die Permanentmagnete.

Das Magnetlager gemäß der Erfindung ist im Allgemeinen für einen um eine Rotationsachse (Drehachse) rotierbaren oder rotierenden Körper (Rotor) vorgesehen. Dazu ist das innere Lagerteil oder das äußere Lagerteil mit dem Rotor verbunden oder verbindbar.

Vorteilhafte Ausgestaltungen und Weiterbildungen des Magnetlagers gemäß der Erfindung ergeben sich aus den vom Anspruch 1 abhängigen Ansprüchen.

In einer ersten Ausführungsform ist die radiale Halteeinrichtung an einer von der Rotationsachse abgewandten Außenseite des Permanentmagneten angeordnet und verhindert dadurch ein Austreten von Teilen des Permanentmagneten in der nach außen gerichteten radialen Richtung. Diese Verhinderung einer Bewegung des Permanentmagneten und Bruchstücken daraus zumindest in der nach außen gerichteten radialen Richtung mittels der radialen Halteeinrichtung ist besonders bei einer Ausführungsform des Magnetlagers zweckmäßig, bei der wenigstens ein Permanentmagnet am rotierbaren oder rotierenden oder mit dem Rotor verbundenen oder verbindbaren Lagerteil vorgesehen ist. Infolge der Drehung des Lagerteils und des daran befindlichen Permanentmagneten wirken nämlich auf den Permanentmagneten in der nach außen gerichteten radialen Richtung Zentrifugalkräfte, die um so größer sind, je schneller sich das Lagerteil dreht. Die radiale Halteeinrichtung hält dann den Permanentmagneten zumindest in dieser kritischen Richtung der Zentrifugalkräfte. Dadurch werden auch Zentrifugalkräfte im rotierenden Permanentmagneten nach außen abgefangen und eine Ablösung von Magnetpartikeln nach außen vermieden.

In einer zweiten Ausführungsform ist die radiale Halteeinrichtung an einer der Rotationsachse zugewandten Innenseite des Permanentmagneten angeordnet und verhindert dadurch ein Austreten von Teilen des Permanentmagneten in der nach innen gerichteten radialen Richtung. Dies ist beispielsweise von Vorteil, wenn der Permanentmagnet am äußeren Lagerteil angeordnet ist, um den Lagerspalt und das innere Lagerteil vor Bruchstücken des Permanentmagneten zu schützen. Diese zweite Ausführungsform kann auch mit der vorgenannten ersten Ausführungsform kombiniert werden.

In einer vorteilhaften Ausführungsform liegt die radiale Halteeinrichtung wenigstens in einem Teilbereich formschlüssig und/oder kraftschlüssig an dem Permanentmagneten an, so dass insbesondere Zwischenräume vermieden werden und der Permanentmagnet mechanisch zusammengehalten und dadurch stabilisiert wird.

Die radiale Halteeinrichtung kann wenigstens teilweise mit einem flexiblen (biegsamen) Material gebildet sein und kann dann unterschiedlich gestalteten Permanentmagneten und Lagerteilen leicht angepasst werden. Wenigstens ein Halteelement der radialen Halteeinrichtung ist vorzugsweise bandförmig ausgebildet und dabei im Allgemeinen mit seiner Breitseite dem Permanentmagneten zugewandt.

Die radiale Halteeinrichtung kann aber auch wenigstens teilweise mit einem formstabilen (starren) Material gebildet sein.

Das Material der radialen Halteeinrichtung ist im Allgemeinen mechanisch stabil, zug- und reißfest und vorzugsweise nichtmagnetisch, um die Lagertragkraft möglichst wenig oder gar nicht zu schwächen. Bevorzugte Materialien für die radiale Halteeinrichtung sind Faserwerkstoffe oder Faserverbundwerkstoffe. Insbesondere kommen mit Kohlenstoff-Faser oder Glasfaser oder mineralischer Faser verstärkte Kunststoffe (Polymerwerkstoffe), Fasergewebe, Fasergewirke, Fasergelege oder gepresste Faserwerkstoffe in Betracht. Ferner geeignet sind auch unmagnetische Metalle oder Metalllegierungen, beispielsweise unmagnetische Stähle.

In einer vorteilhaften Ausführungsform umfasst das Magnetlager mehrere, axial zur Rotationsachse nebeneinander (oder: stapelförmig) angeordnete Permanentmagnete an einem der Lagerteile. Die Permanentmagnete können aber auch in einer die Rotationsachse umlaufenden Anordnung, insbesondere in Umfangsrichtung, nebeneinander angeordnet sein. Zwischen wenigstens zwei der Permanentmagneten und/oder in axialer Richtung an den äußeren Permanentmagneten außen ist nun jeweils ein Flussleitelement angeordnet. Vorzugsweise sind die Magnetisierungen der Permanentmagnete alternierend, die Magnetisierungen zweier benachbarter Permanentmagnete also entgegengesetzt gepolt.

Über die einzelnen Halteelemente für die Permanentmagnete und die Flussleitelemente erstreckt sich nach der Erfindung zur zusätzlichen Verstärkung ein gemeinsames Halteelement.

Ferner umläuft in einer vorteilhaften Ausgestaltung wenigstens ein radiales Halteelement die Rotationsachse in einer oder mehreren Lagen, bildet also eine geschlossene hohlzylinder-, ring-, wirbel- oder schlaufenförmige Gestalt um die Rotationsachse.

Die radiale Dicke (Ausdehnung) des oder der radialen Halteelemente(s) gemessen ab dem Permanentmagneten in der betrachteten radialen Richtung, beträgt im Allgemeinen höchstens ein Drittel (1/3), insbesondere höchstens ein Viertel (1/4) und vorzugsweise höchstens ein Zehntel (1/10) der radialen Dicke des Permanentmagneten. Außerdem ist die radiale Ausdehnung jedes radialen Halteelements vorzugsweise auch kleiner gewählt als die radiale Abmessung (Spaltbreite) des Lagerspaltes.

Die radiale Ausdehnung des oder der radialen Halteelemente ist vorzugsweise ferner so gewählt, dass sie die Differenz zwischen der radialen Ausdehnung des oder der weiter nach außen abstehenden Flussleitelement(e) einerseits und der radialen Ausdehnung des oder der Permanentmagnete(n) andererseits nicht wesentlich überschreitet und vorzugsweise kleiner ist oder höchstens gleich wie diese Differenz. Dadurch kann der Lagerspalt gering bleiben und wird in seinen radialen Abmessungen nur durch die Flussleitelemente begrenzt. Die Halteelemente und die Flussleitelemente können insbesondere in radialer Richtung bündig miteinander abschließen, so dass eine im Wesentlichen glatte, vorzugsweise zylindrische, gemeinsame Oberfläche gebildet ist, die den Lagerspalt begrenzt.

Da jeder Permanentmagnet des Magnetlagers von dem zugehörigen radialen Halteelement stabilisiert ist, kann jeder Permanentmagnet aus einem spröden Material bestehen, insbesondere einem gesinterten oder gepressten Formkörper, oder sogar überhaupt nicht formstabil sein, insbesondere aus magnetischem Pulver gebildet sein. Dies erlaubt, ohne die Gefahr mechanischer Schäden am Lager, den Einsatz der Magnetmaterialien Neodym(Nd)-Eisen(Fe)-Bor(B)-Legierung oder Samarium(Sm)-Kobalt(Co)-Legierung.

Der oder die Permanentmagnet(e) und/oder das oder die Flussleitelement(e) und/oder das oder die Halteelement(e) und/oder die Kopplungsmittel umgeben in einer vorteilhaften Ausgestaltung die Rotationsachse in einer (ringsum) geschlossenen Gestalt, vorzugsweise in Gestalt eines Ringes. Der Ringquerschnitt kann dabei insbesondere kreisförmig, scheibenförmig oder rechteckig sein entsprechend einer hohlzylindrischen bzw. torusförmigen Ringgestalt. Der Ringlängsschnitt senkrecht zur Rotationsachse kann also insbesondere kreisringförmig sein.

Die radial innenliegende oder außenliegende Außenseite wenigstens eines Permanentmagneten und/oder der zugehörigen radiale Halteeinrichtung ist vorzugsweise im Wesentlichen zylindrisch geformt, so dass sich auf der Außenseite dieses Permanentmagneten oder einer Anordnung mehrerer solcher Permanentmagnete bzw. der daran angeordneten radiale Halteeinrichtung eine Mantelfläche eines Zylinders ergibt. Die Außenseite wenigstens eines Permanentmagneten und/oder der zugehörigen radiale Halteeinrichtung kann aber auch, insbesondere nach einer Richtung, beispielsweise axial und/oder konisch, ansteigen. Vorzugsweise wird die radiale Halteeinrichtung der äußeren Gestalt der Permanentmagnete angepasst.

Eine besonders vorteilhafte Ausgestaltung des Magnetlagers zeichnet sich dadurch aus, dass als Kopplungsmittel eine supraleitende Struktur vorgesehen ist, die vorzugsweise einen Hochtemperatur-Supraleiter aufweist, also einen Supraleiter, dessen kritische Temperatur über 77 K liegt. Es können als Kopplungsmittel aber auch Elektromagnete, die induktiv ein Magnetfeld erzeugen, oder Permanentmagnete verwendet werden. Insbesondere bei Elektromagneten wird dann im Allgemeinen auch eine automatische Lageregelung vorgesehen.

Ferner ist es vorteilhaft, die Kopplungsmittel an der dem Lagerspalt zugewandten Seite des Lagerteils anzuordnen, um einen guten Wirkungsgrad der Kopplung zu erreichen.

Die Erfindung wird im Folgenden anhand von Ausführungsbeispielen weiter erläutert. Dabei wird auf die Zeichnungen Bezug genommen, in deren
- FIG 1: ein Magnetlager mit Einzelbandagen für axial angeordnete Permanentmagnete in einer perspektivischen und teilweise geschnittenen Ansicht und
- FIG 2: ein erfindungsgemäßes Magnetlager mit Einzelbandagen und einer gemeinsamen Bandage für axial angeordnete Permanentmagnete in einer perspektivischen und teilweise geschnittenen Ansicht
jeweils schematisch veranschaulicht sind. Einander entsprechende Teile sind in den FIG 1 und 2 mit denselben Bezugszeichen versehen.

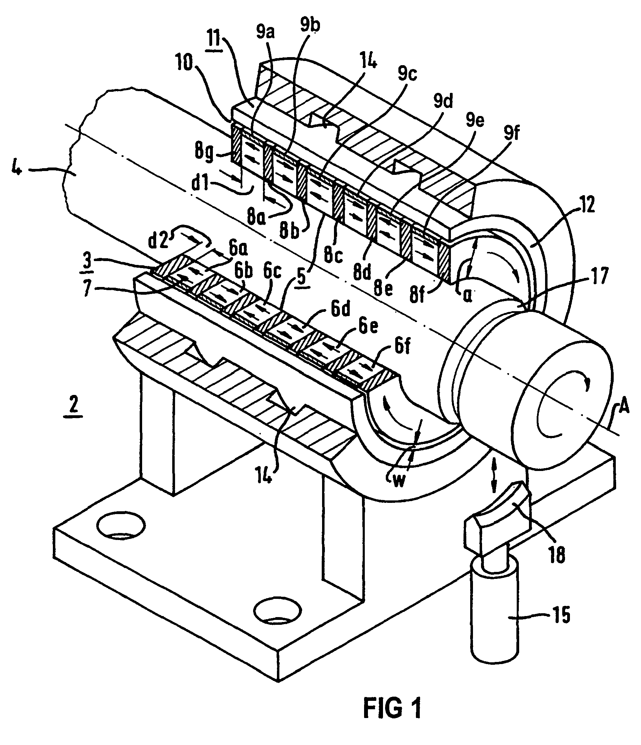

Bei dem in FIG 1 gezeigten, mit 2 bezeichneten Magnetlager für eine rotierende Welle 4 als Rotor sind ein mit der rotierenden Welle 4 verbundenes Lagerinnenteil mit 5, ein aus Lagerinnenteil 5 und Welle 4 gebildeter Rotorkörper mit 3 und ein Lageraußenteil mit 11 bezeichnet.

Das Lagerinnenteil 5 ist mit mehreren, beispielsweise sechs, ringscheibenförmigen permanentmagnetischen Elementen (Permanentmagnete) 6a bis 6f versehen. Diese permanentmagnetischen Elemente 6a bis 6f sind jeweils so polarisiert, dass axial, also in Richtung der Wellenachse A gesehen, die Polarisation von Element zu Element entgegengesetzt ist. Die einzelnen Polarisationsrichtungen sind in der Figur durch gepfeilte Linien 7 angedeutet.

Zwischen den permanentmagnetischen Elementen 6a bis 6f sind ringscheibenförmige Elemente (Zwischenelemente) 8a bis 8e aus einem ferromagnetischen Material wie z. B. Eisen angeordnet. Außerdem sind an den stirnseitigen Außenflächen der äußeren permanentmagnetischen Elemente 6a bis 6f den Elementen 8a bis 8e entsprechende ferromagnetische Elemente 8f und 8g vorgesehen. Das ferromagnetische Material dieser ferromagnetischen Elemente 8a bis 8g dient zur Konzentration des Magnetflusses an der zylinderförmigen Außenfläche des Lagerinnenteils 5 und erhöht dadurch die Tragkraft des Lagers 2. Zugleich verstärken die ferromagnetischen Elemente 8a bis 8g auch mechanisch das Lagerinnenteil 5 mit den im Allgemeinen aus sprödem Material bestehenden permanentmagnetischen Elementen 6a bis 6f. Die ferromagnetischen Elemente 8a bis 8g haben somit einerseits die Funktion von Flussleitelementen zum Führen (Leiten) des Magnetflusses und andererseits die Funktion von axialen Halteelementen.

Alle Elemente 6a bis 6f und 8a bis 8g sind stapelförmig axial hintereinander an der Welle 4 befestigt. Die Welle 4 besteht vorteilhaft aus einem nicht-magnetischen oder nicht magnetisierbaren Material wie z. B. aus einem besonderen Stahl. Der Stapel von permanentmagnetischen Elementen kann aber auch auf einem rohrförmigen Trägerkörper aus unmagnetischem Material aufgebracht sein, der seinerseits einen gegebenenfalls sogar ferromagnetischen Wellenteil umschließt. Die Wandstärke dieses dann einen hohlzylindrischen Randbereich der Welle 4 darstellenden Trägerkörpers sollte in diesem Falle mindestens die halbe axiale Dicke der Magnetpole , d. h. (d1 + d2)/2, betragen. Im Allgemeinen besteht jedoch die gesamte Rotorwelle 4 aus dem nicht-magnetischen Material.

Die Außenkontur der ferromagnetischen Elemente 8a bis 8g und gegebenenfalls die der permanentmagnetischen Elemente 6a bis 6f wird nach dem Stapeln und, beispielsweise durch eine Verklebungstechnik bewirkten, Fixieren, beispielsweise durch Schleifen oder Drehen in eine gleichmäßige zylindrische Form gebracht. Durch das ferromagnetische Material der Elemente 8a bis 8g wird das Magnetfeld rotationssymmetrisch, wobei zugleich Inhomogenitäten im Feld der permanentmagnetischen Elemente 6a bis 6f ausgeglichen werden.

Die radiale Ausdehnung a der ringscheibenförmigen permanentmagnetischen Elemente 6a bis 6f sollte vorteilhaft mindestens das Zweifache ihrer Dicke d1 in axialer Richtung betragen. Demgegenüber wird vorteilhaft die axiale Dicke d2 jedes der ferromagnetischen Elemente 8a bis 8g kleiner als die axiale Dicke d1 der permanentmagnetischen Elemente 6a bis 6f gewählt; beispielsweise liegt die Dicke d2 bei ein bis zwei Zehntel der Dicke d1.

Das Lagerinnenteil 5 ist durch einen Lagerspalt 10 getrennt von einem hohlzylinderförmigen, ortsfesten Lageraußenteil 11 umgeben. Die Spaltweite (radiale Abmessung) w des Lagerspaltes 10 zwischen Lagerinnenteil 5 und Lageraußenteil 11 liegt vorzugsweise in der Größenordnung der axialen Dicke d2 der ferromagnetischen Zwischenelemente 8a bis 8g. Typische Werte für die Spaltweite w und die axiale Dicke d2 liegen zwischen 0,1 mm und 5 mm, vorzugsweise zwischen 0,3 mm und 1,5 mm.

Das einen Stator bildende Lageraußenteil 11 weist auf seiner dem Lagerinnenteil 5 zugewandten Innenseite eine supraleitende Struktur 12 auf, vorzugsweise aus einem der bekannten Hochtemperatur-Supraleiter-Materialien (Hoch-T_{c}-Supraleiter-Materialien), die eine Flüssig-Stickstoff(LN₂)-Kühltechnik erlauben.

Als Supraleitermaterial für die supraleitende Struktur 12 kommt insbesondere texturiertes YBa₂Cu₃O₇₋ₓ in Frage. Vorteilhaft sind dabei die kristallinen a-b-Ebenen von mindestens einem großen Teil des Supraleitermaterials im Wesentlichen parallel zur Außenfläche des Lagerinnenteils 5 ausgerichtet. In dem Supraleitermaterial können vorteilhaft fein verteilte Ausscheidungen von Y₂BaCuO₅ vorhanden sein. Ein entsprechendes Material lässt sich z. B. nach der sogenannten Quench-Melt-Growth-Methode *(vgl.* Superconductor Science Technology, Vol. 5, 1992, Seiten 185 bis 203*)* herstellen und sollten bei 77 K eine kritische Stromdichte von einigen 10⁴ A/cm² aufweisen. Die mittlere Korngröße (Korndurchmesser) der Kristallite (Körner) des Supraleiters sollte dabei größer als die axiale Dicke d1 der permanentmagnetischen Elemente 6a bis 6f sein, wobei die Korngröße in den kristallinen a-b-Ebenen betrachtet wird.

Der von benachbarten permanentmagnetischen Elementen (z. B. 6d, 6e) am Lagerinnenteil 5 hervorgerufene Magnetfluss wird weitgehend in dem gemeinsamen ferromagnetischen Zwischenelement (8d) konzentriert und tritt so mit hoher Flussdichte über dieses Zwischenelement in den Lagerspalt 10 aus. In dem Lagerspalt 10 schließt sich der Fluss zu jeweils benachbarten Zwischenelementen (8c bzw. 8e) hin. In der das Lagerinnenteil 5 umschließenden, den Lagerspalt 10 begrenzenden und ortsfesten supraleitenden Struktur 12 induziert der von den einzelnen Magnetpolen erzeugte Magnetfluss entsprechende Ströme, die wiederum eine magnetische Kopplung oder Gegenkopplung bewirken. Auf der Seite der Rotorwelle 4 schließt sich der magnetische Fluss im Bereich des nicht-magnetischen Materials der Welle 4. Damit wird dort vorteilhaft ein magnetischer Kurzschluss vermieden, der zu einer Reduzierung des in den Lagerspalt 10 austretenden Magnetflusses führen würde.

Bezüglich der Ausgestaltung und weiterer Einzelheiten der Materialien, Ausgestaltungen, Bemessungen und Funktion des Magnetlagers wird auch auf die DE 44 36 831 C2 verwiesen.

Das permanentmagnetische Material der Elemente 6a bis 6f soll ein maximales Energieprodukt (B * H)ₘₐₓ von wenigstens 20 MGOe aufweisen, um die erforderlichen Lagerkräfte und Lagerstabilität aufzubringen. Geeignete Materialien mit einem solch hohen Energieprodukt sind insbesondere eine Neodym(Nd)-Eisen(Fe)-Bor(B)-Legierung oder eine Samarium(Sm)-Kobalt(Co)-Legierung.

Der maximale Lagerdruck wird nicht durch das für den Stator vorgesehene Supraleitermaterial, sondern durch das maximal erreichbare Magnetfeld H im Lagerspalt 10 vorgegeben. Dafür ist der relevante Parameter die Koerzitivfeldstärke H_{c} des permanentmagnetischen Materials. Als permanentmagnetisches Material kommt deshalb insbesondere NdFeB in Frage, da es eine verhältnismäßig hohe Koerzitivfeldstärke H_{c} hat. SmCo hat gegenüber Raumtemperatur bei 77 K eine um 10% höhere Koerzitivfeldstärke H_{c}, die dann mit der von NdFeB vergleichbar wird. Gegebenenfalls kommt deshalb auch eine Kühlung des permanentmagnetischen Materials in Frage.

Die genannten Legierungen NdFeB und SmCo werden im Allgemeinen pulvermetallurgisch aus einem Pulver hergestellt, insbesondere gepresst und anschließend geglüht, heißgepresst oder gesintert. Beispielsweise können die in Applied Physics Letters, Vol. 46 (8), 15 April 1985, Seiten 790 und 791 sowie in Applied Physics Letters, Vol. 53 (4) 25 July 1988, Seiten 342 und 343 beschriebenen Herstellverfahren zum Herstellen der Permanentmagnete verwendet werden.

Die derart hergestellten Formkörper für die permanentmagnetischen Elemente 6a bis 6f sind spröde und können unter der Einwirkung hoher Kräfte wie der hohen Magnetfelder im Magnetlager und der im Lager wirkenden Zentrifugalkräfte Magnetpartikel oder sogar größere Bruchstücke abgeben, insbesondere aufgrund Materialermüdung oder Dauerbelastung. Das Problem der Sprödigkeit der Permanentmagneten wird durch die tiefen Temperaturen im Magnetlager 2 noch verschärft. Die abgelösten Magnetpartikel oder größeren Stücke aus den permanentmagnetischen Elementen 6a bis 6f können in den Lagerspalt 10 gelangen und dort zu erheblichen Schäden bis zum Totalausfall führen.

Um dies zu verhindern ist nun gemäß der Erfindung für die permanentmagnetischen Elemente 6a bis 6f eine radiale Halteeinrichtung vorgesehen, die die permanentmagnetischen Elemente 6a bis 6f in radialer Richtung bezüglich der Drehachse (Rotationsachse) oder Wellenachse A zusammenhält. Besonders kritisch sind dabei die Bereiche oder Seiten der permanentmagnetischen Elemente 6a bis 6f, die dem Lagerspalt 10 zugewandt sind. Die radiale Halteeinrichtung kann dazu flexible Halteelemente oder auch formstabile Halteelemente umfassen.

In FIG 1 ist nun jedes der ringförmigen permanentmagnetischen Elemente 6a bis 6f mit jeweils einem zugehörigen Halteelement 9a bis 9f in einer oder mehreren Lagen umwickelt oder umspannt. Jedes Halteelement 9a bis 9f ist vorzugsweise in Form eines flexiblen Bandes (Haltebandes) aus einem reißfesten und zugfesten Material ausgestaltet.

Als Material für die Halteelemente (Haltebänder) 9a bis 9f ist ein Faserverbundwerkstoff, ein reiner Faserwerkstoff oder ein anderes stabiles Bandagiermaterial, beispielsweise ein Metall oder eine Matalllegierung, zweckmäßig. Als Faserverbundwerkstoffe können insbesondere mit Fasern, insbesondere mit Kohlenstoff-Fasern und/oder Glasfasern, verstärkte Kunststoffe oder Kunstharze verwendet werden, und als Faserwerkstoffe insbesondere gewebte, gewirkte oder gepresste Werkstoffe aus Fasern, vorzugsweise Kunststoff-Fasern oder Glasfasern oder mineralischen Fasern, insbesondere Aramid, Kevlar, Bor oder ähnliche Materialien, wobei in allen Fällen die Fasern unidirektional oder auch im Winkel zueinander verlaufen können. Der Faserverbundwerkstoff oder Faserwerkstoff kann insbesondere vorgespannt sein, um thermische Spannungsunterschiede zu kompensieren.

Jedes Halteelement 9a bis 9f wird um das zugehörige permanentmagnetische Element 9a bis 9f unter einer vorgegebenen Zugspannung gespannt und insbesondere an einem oder beiden Enden mit sich selbst verbunden, um eine ringsum geschlossene Halterung zu erhalten.

Die radialen Dicken (Ausdehnungen) der permanentmagnetischen Elemente 6a bis 6f und der radial an deren Außenseite angeordneten Halteelemente 9a bis 9f sind im Allgemeinen so gewählt, dass die Summe der radialen Dicke der Elemente 6a bis 6f und der radialen Dicken der Halteelemente 9a bis 9f im Wesentlichen der radialen Dicke (Ausdehnung) a der ferromagnetischen Elemente 8a bis 8f entspricht oder kleiner ist als diese, wobei die radiale Dicke gemessen ist als Abstand zwischen der der Rotationsachse zugewandten Innenfläche und der entsprechend abgewandten Außenfläche. Dadurch ist an der dem Lagerspalt 10 zugewandten Außenseite des Lagerinnenteils 5 wieder eine einheitliche, im Wesentlichen zylindrische Oberfläche durch die Oberflächen der ferromagnetischen Elemente 8a bis 8f einerseits und die Halteelemente 9a bis 9f andererseits gebildet. Außerdem werden die Halteelemente 9a bis 9f durch jeweils zwei der permanentmagnetischen Elemente 8a bis 8g seitlich an einem axialen Verrutschen gehindert.

Diese Ausbildung mit gegenüber den ferromagnetischen Elementen 8a bis 8g an der Außenseite radial nach innen zurückversetzten (radial eingesenkten) permanentmagnetischen Elementen 6a bis 6f und jeweils einem zugehörigen Halteelement 9a bis 9f hat den Vorteil, dass die Lagerkraft durch die radiale Halteeinrichtung (Bandagierung) mit den Halteelementen 9a bis 9f nur unwesentlich vermindert wird. Die Tragkraft des Lagers 2 wird nämlich hauptsächlich in den Bereichen hoher magnetischer Flussdichte und Flussdichtegradienten radial außerhalb der ferromagnetischen Elemente 8a bis 8g erzeugt. Die nur an den permanentmagnetischen Elementen 6a bis 6f vorgesehenen Halteelemente 9a bis 9f beeinflussen den Magnetfluss in und an den ferromagnetischen Elementen 9a bis 8g jedoch nur geringfügig.

Die radiale Dicke der Halteelemente 9a bis 9f ist im Allgemeinen deutlich kleiner als die radiale Dicke der zugehörigen permanentmagnetischen Elemente 6a bis 6f und beträgt im Allgemeinen höchstens 33,3 %, insbesondere höchstens 25 % und vorzugsweise höchstens 10 % der radialen Dicke der permanentmagnetischen Elemente 6a bis 6f, um die Lagertragkraft nicht zu sehr zu reduzieren. Vorzugsweise ist die radiale Dicke der Halteelemente 9a bis 9f auch kleiner als die Spaltweite w des Lagerspaltes 10. Die Werte für die radiale Dicke der Halteelemente 9a bis 9f werden im Allgemeinen aus einem Bereich zwischen 0,1 mm und 4 mm, insbesondere zwischen 0,2 mm und 3 mm und vorzugsweise zwischen 0,3 mm und 1 mm gewählt.

Die axiale Dicke (Länge) d1 der permanentmagnetischen Elemente 6a bis 6f entspricht der axialen Dicke (Breite) der Halteelemente 9a bis 9f, so dass die permanentmagnetischen Elemente 6a bis 6f an ihrer dem Lagerspalt 10 zugewandten Außenseite komplett von den Halteelementen 9a bis 9f abgedeckt sind und keine Partikel in den Lagerspalt 10 abgeben können. Typischerweise liegt die axiale Dicke d1 der permanentmagnetischen Elemente 6a bis 6f und damit die axiale Dicke (Breite) der Halteelemente 9a bis 9f in einem Bereich zwischen etwa 0,5 mm und etwa 5 mm, insbesondere zwischen 1 mm und 4 mm.

Durch die beschriebene Bandagierung mittels der bandförmigen Halteelemente 9a bis 9f sind die permanentmagnetischen, aus sprödem Material bestehenden Elemente 6a bis 6f gegenüber dem Lagerspalt 10 wirksam eingekapselt und können keine Magnetpartikel in den Lagerspalt 10 mehr abgeben, so dass das Lager 2 selbst bei schnell laufenden Wellen 4 und den dabei auftretenden höheren Zentrifugalkräften (Fliehkräften) wirksam geschützt ist.

Die zwischen den permanentmagnetischen Elementen 6a bis 6f angeordneten ferromagnetischen Elemente 8a bis 8e sowie die an den äußeren permanentmagnetischen Elementen 6a bis 6f an deren axialer Außenseite angeordneten weiteren ferromagnetischen Elemente 8f und 8g sind in der FIG 1 gezeigten Ausführungsform nicht bandagiert, weisen also an ihrer Außenseite kein Halteelement auf. Die ferromagnetischen Elemente 8a bis 8g sind nämlich in der Regel, auch bei höheren Kräften, stabiler als die permanentmagnetischen Elemente 6a bis 6f, so dass auf eine Sicherung gegen Bruch oder Ablösung von einzelnen Partikeln verzichtet werden kann.

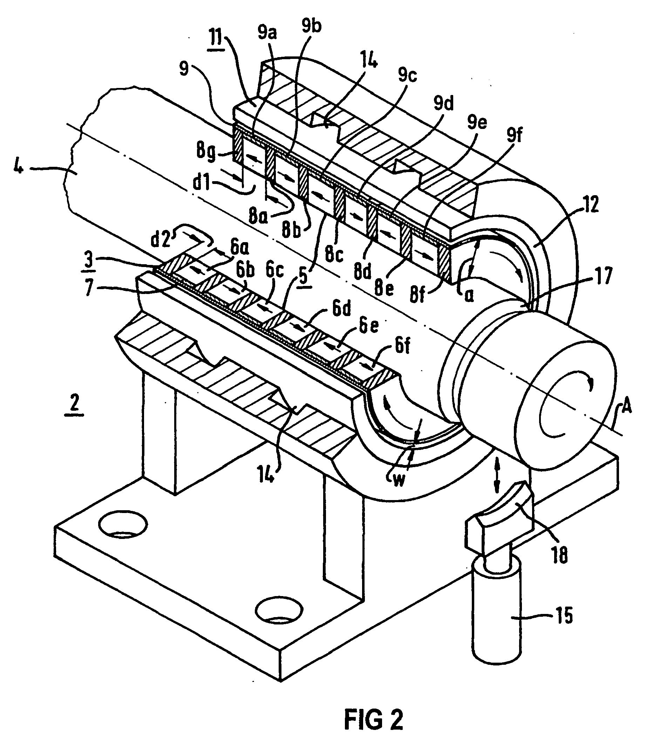

In FIG 2 ist zusätzlich zu den Halteelementen 9a bis 9f, die nur für die permanentmagnetischen Elemente 6a bis 6f vorgesehen sind, eine über das gesamte Lagerinnenteil 5 an dessen Außenseite verlaufendes Halteelement (Halteband) 9 vorgesehen zur zusätzlichen Sicherung sowohl der permanentmagnetischen Elemente 6a bis 6f mit den Halteelementen 9a bis 9f als auch der ferromagnetischen Elemente 8a bis 8g. Die Außenbandagierung durch das Halteelement 9 sollte dabei möglichst dünn sein, um die Tragkraft des Lagers 2 nicht zu weit herabzusetzen. Die radiale Dicke des Halteelements 9 soll deshalb die radiale Dicke der Halteelemente 9a bis 9f nicht überschreiten.

In Abwandlung zu den in FIG 1 und 2 gezeigten Ausführungsformen kann auch eine Bandagierung der einzelnen permanentmagnetischen Elemente 6a bis 6f vorgesehen sein, die die Elemente auch an der Innenseite umgibt. Die permanentmagnetischen Elemente 6a bis 6f werden in dieser Ausführungsform komplett in ein Band eingewickelt und in der Regel erst dann am Lagerinnenteil 5 montiert.

Anstelle einer Bandagierung mit flexiblen Haltebändern kann die radiale Halteeinrichtung auch formstabile Umkapselungen oder Umhüllungen der permanentmagnetischen Elemente 6a bis 6f umfassen. Beispielsweise können hohlzylindrische oder ringförmige, von außen aufgeschobene oder aufgelegte Haltekörper verwendet werden oder die Elemente in einer Umhüllung eingebettet oder von dieser umgossen oder umspritzt werden.

Wie ferner aus FIG 1 oder FIG 2 hervorgeht, wird das supraleitende Material an der Außenseite der Struktur 12 über Kühlkanäle 14 in dem Trägerkörper 13 mit flüssigem Stickstoff (LN₂) aus einem externen Vorratsbehälter gekühlt.

Außerhalb des Bereichs des Lagerinnenteils 5 weist das Magnetlager 2 eine absenkbare Halte- und Zentriervorrichtung 15 auf, die die Lagerkraft bei Stillstand aufnimmt, solange das supraleitende Material über seiner Betriebstemperatur liegt. Diese Vorrichtung hebt die Welle 4 an, bis das Lagerinnenteil 5 an einem oberen Scheitelpunkt nahezu oder ganz die supraleitende Struktur 12 berührt. Gleichzeitig wird die Lagerposition axial und lateral zentriert. Diese Zentrierung kann, wie aus FIG 1 hervorgeht, beispielsweise durch eine Nut 17 in der Welle 4 und eine schneidenförmige Auflage 18 an der Einrichtung 15 geschehen. Nach Abkühlen senkt die Vorrichtung 15 die Welle 4 ab. Infolge der damit verbundenen Feldänderung im Supraleitermaterial werden darin Ströme induziert. Es entwickelt sich so eine zunehmende elektromagnetische Kraft zwischen Lagerinnenteil 5 und dem es umgebenden Lageraußenteil 11 (Stator), die der Bewegungsrichtung entgegengesetzt wirkt, bis das Lagerinnenteil 5 und die Welle 4 etwa in der Mitte des Lagerspalts 10 frei schweben. Dabei wirken die Magnetkräfte im unteren Lagerbereich abstoßend, während sich im oberen Lagerbereich anziehende Kräfte addieren. Mit dieser Lagerung sind Lagerdrücke von bis zu 10 bar und eine erhebliche Steifigkeit der Lagerung gegen Verschiebungen des Rotors in radialer und axialer Richtung zu erreichen.

Alternativ zu den in FIG 1 und 2 gezeigten Ausführungsbeispielen kann in einer nicht dargestellten Ausführungsform das Magnetlager in Gestalt von Hohlzylindersegmenten ausgebildete und in Umfangsrichtung um die Drehachse A nebeneinander angeordneten sowie in Umfangsrichtung gesehen alternierend gepolte permanentmagnetische Elemente und dazwischen verlaufende ferromagnetische Elemente aufweisen. Diese Elemente sind dann in Form von achsenparallelen Streifen zu einer Hohlzylinderform um die Welle 4 zusammengefügt. Eine solche Lagerung wirkt als Radiallager sowie zugleich als berührungsfreie magnetische Kopplung, d.h. es kann gleichzeitig ein axiales Drehmoment übertragen werden. Als Beispiel ist ein Läufer mit supraleitender Wicklung möglich mit einem solchen Lager auf der Antriebsseite und einem Radiallager wie vorstehend beschrieben auf der Gegenseite, der sich völlig berührungsfrei in einem Stator dreht.

Bei den in den FIG 1 bis 2 gezeigten Ausführungsformen von Lagern 2 bzw. 20, letzteres erfindungsgemäß, wurde davon ausgegangen, dass jeweils das warme rotierende (innere) Lagerteil von einem feststehenden kalten (äußeren) Lagerteil als Stator umgeben ist. Ebensogut ist es jedoch auch möglich, das kalte Lagerteil mit dem Hoch-T_{c}-Supraleitermaterial mitrotieren zu lassen und das warme Lagerteil mit dem permanentmagnetischen Material als Stator auszubilden. Bei dieser Ausführungsform kann die Rotorwelle 34 aus nicht-magnetischem Material zugleich mindestens einen, insbesondere zentralen, Kühlmittelkanal aufweisen. Entsprechende Lagerungen mit kaltem Rotorkörper können vorteilhaft Teil eines Generator- oder Motorläufers mit einer Wicklung aus Hoch-T_{c}-Supraleitermaterial sein, wobei sich auch die Welle auf tieferer Temperatur befindet. Infolge der Berührungsfreiheit entfällt die Wärmeeinleitung über die Welle.

Die Bandagierung oder Halterung gemäß der Erfindung ist nicht auf Magnetlager mit Supraleitern als mit den Permanentmagneten wechselwirkende Kopplungsmittel beschränkt, sondern ist auch bei konventionellen Magnetlagern mit Elektromagneten oder Permanentmagneten als Kopplungsmittel einsetzbar, insbesondere bei den aus den eingangs erwähnten Druckschriften bekannten Magnetlagern. Außerdem ist eine Halteeinrichtung gemäß der Erfindung für die spröden Permanentmagneten grundsätzlich auch bei nicht oder nicht nur drehenden Magnetlagern denkbar, beispielsweise bei linearen Magnetlagern für translatorische Bewegungen.

## Patentansprüche

1. Magnetlager mit
a) wenigstens einem inneren Lagerteil (5),
b) wenigstens einem äußeren Lagerteil (11), das das innere Lagerteil umgibt,
c) wenigstens einem Permanentmagneten (6a bis 6f) und wenigstens einem axial zu einer Rotationsachse (A) neben dem oder den Permanentmagneten angeordneten Flussleitelement (8a bis 8e) zum Leiten des magnetischen Flusses des oder der Permanentmagnete an einem der beiden Lagerteile,
d) wenigstens einem Kopplungsmittel (12, 32) an dem anderen der beiden Lagerteile,
wobei
e) permanentmagnet (e) und Kopplungsmittel derart miteinander wechselwirken, dass zwischen dem inneren Lagerteil und dem äußeren Lagerteil ein um die Rotationsachse verlaufender Lagerspalt (10) bildbar oder gebildet ist,
f) die beiden Lagerteile gegeneinander um die Rotationsachse rotierbar sind oder rotieren,
g) der oder die Permanentmagnet (e) zum Lagerspalt hin gegenüber dem oder den Flussleitelement(en) in einer senkrecht zur Rotationsachse gerichteten radialen Richtung radial zurückversetzt ist bzw. sind,
i) mehrere Permanentmagnete vorgesehen sind, die axial zur Rotationsachse hintereinander angeordnet sind,
j) zwischen wenigstens zwei der Permanentmagneten (6a bis 6f) jeweils ein Flussleitelement (8a bis 8e) angeordnet ist, das den gesamten Zwischenraum zwischen den beiden Permanentmagneten ausfüllt,
**dadurch gekennzeichnet, daß**
h) jeder Permanentmagnet zumindest an der dem Lagerspalt zugewandten Seite von einem zugehörigen radialen Halteelement (9a bis 9f) in radialer Richtung gehalten ist und
k) zusätzlich ein sich über die den Permanentmagneten zugeordneten einzelnen Halteelemente (9a bis 9f) und die Flussleitelemente erstreckendes gemeinsames radiales Halteelement (9) vorgesehen ist.

2. Magnetlager nach Anspruch 1, bei dem jedes radiale Halteelement wenigstens in einem Teilbereich formschlüssig und/oder kraftschlüssig an dem zugehörigen Permanentmagneten anliegt.

3. Magnetlager nach Anspruch 1 oder Anspruch 2, bei dem der wenigstens eine Permanentmagnet am inneren Lagerteil vorgesehen ist und das innere Lagerteil rotierbar ist oder rotiert.

4. Magnetlager nach einem der vorhergehenden Ansprüche, bei dem jedes radiale Halteelement die Rotationsachse in einer oder mehreren Lagen umläuft.

5. Magnetlager nach einem der vorhergehenden Ansprüche, bei dem wenigstens ein radiales Halteelement wenigstens teilweise mit einem flexiblen Material gebildet ist.

6. Magnetlager nach einem der vorhergehenden Ansprüche, bei dem wenigstens ein radiales Halteelement wenigstens teilweise mit einem formstabilen Material oder als Formkörper gebildet ist.

7. Magnetlager nach einem der vorherigen Ansprüche, bei dem jedes radiale Halteelement mit einem nicht-magnetischen Material gebildet ist.

8. Magnetlager nach einem der vorhergehenden Ansprüche, bei dem jedes radiale Halteelement wenigstens teilweise aus einem Faserwerkstoff, insbesondere einem Fasergewebe, Fasergewirke, Fasergelege oder gepressten Faserwerkstoff, oder einem Faserverbundwerkstoff, insbesondere einem mit Kohlenstoff-Faser oder Glasfaser oder mineralischer Faser verstärkten Polymerwerkstoff, besteht.

9. Magnetlager nach einem der vorhergehenden Ansprüche, bei dem wenigstens ein radiales Halteelement mit einem Halteband gebildet ist.

10. Magnetlager nach einem der vorhergehenden Ansprüche, bei dem in axialer Richtung zur Rotationsachse außen an den äußersten Permanentmagneten (6a, 6e) ebenfalls jeweils ein Flussleitelement (8f, 8g) angeordnet ist.

11. Magnetlager nach einem der vorhergehenden Ansprüche, bei dem unmittelbar benachbarte Permanentmagnete zueinander im Wesentlichen entgegengesetzt magnetisch gepolt sind.

12. Magnetlager nach einem der vorhergehenden Ansprüche, bei dem die radiale Ausdehnung jedes radialen Halteelements gemessen ab dem Permanentmagneten in der entsprechenden radialen Richtung im Allgemeinen um wenigstens einen Faktor 3, insbesondere um wenigstens einen Faktor 4 und vorzugsweise um wenigstens einen Faktor 10, kleiner ist als die radiale Ausdehnung des Permanentmagneten.

13. Magnetlager nach einem der vorhergehenden Ansprüche, bei dem die radiale Ausdehnung jedes radialen Halteelements, gemessen ab dem Permanentmagneten in der entsprechenden radialen Richtung, kleiner ist als die radiale Abmessung (w) des Lagerspaltes.

14. Magnetlager nach einem der vorhergehenden Ansprüche, bei dem die radiale Ausdehnung jedes radialen Halteelements kleiner oder gleich der Differenz aus der radialen Ausdehnung des wenigstens einen Flussleitelements und der radialen Ausdehnung des wenigstens einen Permanentmagneten ist.

15. Magnetlager nach Anspruch 14, bei dem die dem Lagerspalt zugewandten Seiten des oder der Flussleitelemente(s) und des oder der Halteelemente(s) eine im Wesentlichen zylindrische gemeinsame Oberfläche bilden.

16. Magnetlager nach Anspruch 9 oder einem der auf Anspruch 9 rückbezogenen Ansprüche, bei dem die radiale Ausdehnung des gemeinsamen radialen Halteelements kleiner ist als die radiale Ausdehnung jedes der einzelnen Halteelemente.

17. Magnetlager nach einem oder mehreren der vorhergehenden Ansprüche, bei dem der oder die Permanentmagnet(e) aus einem spröden Material besteht bzw. bestehen, insbesondere einem pulvermetallurgisch hergestellten, vorzugsweise gesinterten oder gepressten, Formkörper, oder überhaupt nicht formstabil ist bzw. sind, insbesondere aus magnetischem Pulver gebildet ist bzw. sind.

18. Magnetlager nach einem oder mehreren der vorhergehenden Ansprüche, bei dem jeder Permanentmagnet zumindest überwiegend aus einem Material mit einem hohen Energieprodukt, vorzugsweise aus einer Neodym(Nd)-Eisen(Fe)-Bor(B)-Legierung oder einer Samarium(Sm)-Kobalt (Co)-Legierung, besteht.

19. Magnetlager nach einem oder mehreren der vorhergehenden Ansprüche, bei dem jeder Permanentmagnet und/oder jedes Flussleitelement und/oder jedes Halteelement und/oder die Kopplungsmittel die Rotationsachse in einer ringsum geschlossenen Gestalt umgeben bzw. umgibt, insbesondere in Gestalt eines Ringes oder Hohlzylinders.

20. Magnetlager nach einem oder mehreren der vorhergehenden Ansprüche, bei dem die dem Lagerspalt zugewandte Seite wenigstens eines Permanentmagneten und/oder des zugehörigen radialen Halteelements wenigstens teilweise im wesentlichen zylindrisch geformt ist.

21. Magnetlager nach einem oder mehreren der vorhergehenden Ansprüche, bei dem das oder die Kopplungsmittel jeweils mit einer supraleitenden Struktur gebildet ist, vorzugsweise mit einem Hochtemperatur-Supraleiter.

## Claims

1. Magnetic bearing with
a) at least one inner bearing part (5),
b) at least one outer bearing part (11), which surrounds the inner bearing part,
c) at least one permanent magnet (6a to 6f) and at least one flux guiding element (8a to 8e) arranged axially in relation to an axis of rotation (A) adjacent to the permanent magnet or magnets to guide the magnetic flux of the permanent magnet or magnets on one of the two bearing parts,
d) at least one coupling means (12, 32) on the other of the two bearing parts,
in which bearing
e) the permanent magnet(s) and coupling means interact with one another in such a way that a bearing gap (10) which runs around the axis of rotation can be or is formed between the inner bearing part and the outer bearing part,
f) the two bearing parts are rotatable or rotate counter to each other about the axis of rotation,
g) the permanent magnet or magnets is or are radially set back toward the bearing gap with respect to the flux guiding element or elements in a radial direction directed perpendicularly in relation to the axis of rotation,
h) a number of permanent magnets, which are arranged axially one behind the other in relation to the axis of rotation, are provided,
i) a flux guiding element (8a to 8e) is respectively arranged between at least two of the permanent magnets (6a to 6f) and fills the entire interspace between the two permanent magnets,
**characterized in that**
j) each permanent magnet is held in the radial direction, at least on the side facing the bearing gap, by an associated radial holding element (9a to 9f), and
k) a common radial holding element (9), extending over the individual holding elements (9a to 9f) assigned to the permanent magnets and over the flux guiding elements, is additionally provided.

2. Magnetic bearing according to Claim 1, in which each radial holding element bears with positive and/or nonpositive engagement against the associated permanent magnet, at least in a subregion.

3. Magnetic bearing according to Claim 1 or Claim 2, in which the at least one permanent magnet is provided on the inner bearing part and the inner bearing part is rotatable or rotates.

4. Magnetic bearing according to one of the preceding claims, in which each radial holding element runs around the axis of rotation in one or more layers.

5. Magnetic bearing according to one of the preceding claims, in which at least one radial holding element is formed at least partly by a flexible material.

6. Magnetic bearing according to one of the preceding claims, in which at least one radial holding element is at least partly formed by a dimensionally stable material or as a molding.

7. Magnetic bearing according to one of the previous claims, in which each radial holding element is formed by a nonmagnetic material.

8. Magnetic bearing according to one of the preceding claims, in which each radial holding element at least partly consists of a fiber material, in particular a woven, knitted or laid fiber fabric or scrim or pressed fiber material, or a fiber composite material, in particular a polymer material reinforced with carbon fiber or glass fiber or mineral fiber.

9. Magnetic bearing according to one of the preceding claims, in which at least one radial holding element is formed by a holding band.

10. Magnetic bearing according to one of the preceding claims, in which a flux guiding element (8f, 8g) is likewise respectively arranged on the outside of the outermost permanent magnets (6a, 6e) in the axial direction in relation to the axis of rotation.

11. Magnetic bearing according to one of the preceding claims, in which the magnetic polarity of directly neighboring permanent magnets is substantially opposite in relation to one another.

12. Magnetic bearing according to one of the preceding claims, in which the radial expanse of each radial holding element, measured from the permanent magnet in the corresponding radial direction, is generally less than the radial expanse of the permanent magnet by at least a factor of 3, in particular by at least a factor of 4 and preferably by at least a factor of 10.

13. Magnetic bearing according to one of the preceding claims, in which the radial expanse of each radial holding element, measured from the permanent magnet in the corresponding radial direction, is less than the radial dimension (w) of the bearing gap.

14. Magnetic bearing according to one of the preceding claims, in which the radial expanse of each radial holding element is less than or equal to the difference between the radial expanse of the at least one flux guiding element and the radial expanse of the at least one permanent magnet.

15. Magnetic bearing according to Claim 14, in which the sides of the flux guiding element or elements and of the holding element or elements facing the bearing gap form a substantially cylindrical common surface.

16. Magnetic bearing according to Claim 9 or one of the claims related back to Claim 9, in which the radial expanse of the common radial holding element is less than the radial expanse of each of the individual holding elements.

17. Magnetic bearing according to one or more of the preceding claims, in which the permanent magnet or magnets consists or consist of a brittle material, in particular a powder-metallurgically produced, preferably sintered or pressed, molding, or is or are not dimensionally stable at all, in particular is or are formed from magnetic powder.

18. Magnetic bearing according to one or more of the preceding claims, in which each permanent magnet consists at least predominantly of a material with a high energy product, preferably of a neodymium (Nd) -iron (Fe) -boron (B) alloy or a samarium (Sa)-cobalt (Co) alloy.

19. Magnetic bearing according to one or more of the preceding claims, in which each permanent magnet and/or each flux guiding element and/or each holding element and/or the coupling means surrounds or surround the axis of rotation in a form which is closed all around, in particular in the form of a ring or hollow cylinder.

20. Magnetic bearing according to one or more of the preceding claims, in which the side of at least one permanent magnet and/or of the associated radial holding element facing the bearing gap is at least partly substantially cylindrically shaped.

21. Magnetic bearing according to one or more of the preceding claims, in which the coupling means is respectively formed with a superconducting structure, preferably with a high-temperature superconductor.

## Revendications

1. Palier magnétique comprenant
a) au moins une partie de palier intérieure (5),
b) au moins une partie de palier extérieure (11), qui entoure la partie de palier intérieure,
c) au moins un aimant permanent (6a à 6f) et au moins un élément de guidage de flux (8a à 8e) qui est (sont) agencé(s) axialement, par rapport à un axe de rotation (A), à côté du ou des aimant(s) permanent(s) en vue de guider le flux magnétique du ou des aimants permanents, sur l'une des deux parties de palier,
d) au moins un moyen de couplage (12, 32) sur l'autre des deux parties de palier,
palier
e) dans lequel l'aimant permanent ou les aimants permanents et le ou les moyen(s) de couplage interagissent de manière qu'entre la partie de palier intérieure et la partie de palier extérieure peut être formé ou est formé un interstice de palier (10) s'étendant autour de l'axe de rotation,
f) dans lequel les deux parties de palier peuvent tourner ou tournent l'une par rapport à l'autre autour de l'axe de rotation,
g) dans lequel l'aimant ou les aimants permanent(s) est ou sont, en direction de l'interstice de palier, en retrait radial par rapport à l'élément de guidage de flux ou aux éléments de guidage de flux, dans une direction radiale dirigée perpendiculairement à l'axe de rotation,
i) dans lequel sont prévus plusieurs aimants permanents qui sont disposés les uns à la suite des autres axialement par rapport à l'axe de rotation,
j) et dans lequel entre au moins deux des aimants permanents (6a à 6f) est agencé respectivement un élément de guidage de flux (8a à 8e), qui remplit la totalité de l'espace intermédiaire entre les deux aimants permanents,
**caractérisé en ce que**
h) chaque aimant permanent, au moins sur le côté dirigé vers l'interstice de palier, est maintenu dans la direction radiale par un élément de maintien radial (9a à 9f) associé, et
k) il est prévu en supplément un élément de maintien radial (9) commun, qui s'étend par-dessus les éléments de maintien (9a à 9f) individuels associés aux aimants permanents, et par-dessus les éléments de guidage de flux.

2. Palier magnétique selon la revendication 1, dans lequel chaque élément de maintien radial s'appuie, au moins dans une zone partielle, par complémentarité de formes et/ou de forces, sur l'aimant permanent associé.

3. Palier magnétique selon la revendication 1 ou 2, dans lequel ledit au moins un aimant permanent est prévu sur la partie de palier intérieure, et la partie de palier intérieure peut être rotative ou est rotative.

4. Palier magnétique selon l'une des revendications précédentes, dans lequel chaque élément de maintien radial s'étend de manière circonférentielle sur une ou plusieurs couches autour de l'axe de rotation.

5. Palier magnétique selon l'une des revendications précédentes, dans lequel au moins un élément de maintien radial est formé au moins partiellement à l'aide d'un matériau flexible.

6. Palier magnétique selon l'une des revendications précédentes, dans lequel au moins un élément de maintien radial est formé au moins partiellement à l'aide d'un matériau de forme stable ou en tant que corps de forme moulé.

7. Palier magnétique selon l'une des revendications précédentes, dans lequel chaque élément de maintien radial est formé à l'aide d'un matériau amagnétique.

8. Palier magnétique selon l'une des revendications précédentes, dans lequel chaque élément de maintien radial est réalisé au moins partiellement en un matériau à fibres, notamment un tissu de fibres, un tricot de fibres, une structure de fibres ou un matériau de fibres compressé, ou en un matériau composite à fibres, notamment en un matériau polymère renforcé de fibres de carbone, ou de fibres de verre ou de fibres minérales.

9. Palier magnétique selon l'une des revendications précédentes, dans lequel au moins un élément de maintien radial est formé à l'aide d'une bande de maintien.

10. Palier magnétique selon l'une des revendications précédentes, dans lequel, dans la direction axiale par rapport à l'axe de rotation, à l'extérieur sur les aimants permanents (6a à 6f) les plus à l'extérieur, est également agencé respectivement un élément de guidage de flux (8f, 8g).

11. Palier magnétique selon l'une des revendications précédentes, dans lequel des aimants permanents directement voisins sont sensiblement polarisés de manière opposée l'un à l'autre sur le plan magnétique.

12. Palier magnétique selon l'une des revendications précédentes, dans lequel l'étendue radiale de chaque élément de maintien radial, mesurée à partir de l'aimant permanent dans la direction radiale correspondante, est en général plus petite d'au moins un facteur 3, notamment d'au moins un facteur 4 et de préférence d'au moins un facteur 10, que l'étendue radiale de l'aimant permanent.

13. Palier magnétique selon l'une des revendications précédentes, dans lequel l'étendue radiale de chaque élément de maintien radial, mesurée à partir de l'aimant permanent dans la direction radiale correspondante, est plus petite que la dimension radiale (w) de l'interstice de palier.

14. Palier magnétique selon l'une des revendications précédentes, dans lequel l'étendue radiale de chaque élément de maintien radial est plus petite que ou égale à la différence entre l'étendue radiale dudit au moins un élément de guidage de flux et l'étendue radiale dudit au moins un aimant permanent.

15. Palier magnétique selon la revendication 14, dans lequel les côtés tournés vers l'interstice de palier, de l'élément ou des éléments de guidage de flux et de l'élément ou des éléments de maintien, forment une surface commune sensiblement cylindrique.

16. Palier magnétique selon la revendication 9 ou l'une des revendications rattachées à la revendication 9, dans lequel l'étendue radiale de l'élément de maintien radial commun, est plus petite que l'étendue radiale de chacun des éléments de maintien individuels.

17. Palier magnétique selon l'une ou plusieurs des revendications précédentes, dans lequel l'aimant ou les aimants permanent(s) est ou sont réalisé(s) en un matériau fragile, notamment sous forme de corps de forme ou de moulage fabriqué par un procédé de métallurgie des poudres, de préférence par frittage ou par compression, ou bien n'est ou ne sont même pas de forme stable, et est ou sont notamment réalisé(s) en une poudre magnétique.

18. Palier magnétique selon l'une ou plusieurs des revendications précédentes, dans lequel chaque aimant permanent est réalisé au moins de manière prépondérante en majorité en un matériau à grand produit énergétique, de préférence en un alliage de néodyme (Nd) - fer (Fe) - bore (B), ou en un alliage de samarium (Sm) - cobalt (Co).

19. Palier magnétique selon l'une ou plusieurs des revendications précédentes, dans lequel chaque aimant permanent et/ou chaque élément de guidage de flux et/ou chaque élément de maintien et/ou les moyens de couplage entoure ou respectivement entourent l'axe de rotation selon une configuration annulaire fermée, notamment sous la forme d'un anneau ou d'un cylindre creux.

20. Palier magnétique selon l'une ou plusieurs des revendications précédentes, dans lequel le côté dirigé vers l'interstice de palier, d'au moins un aimant permanent et/ou de l'élément de maintien radial associé est formé au moins partiellement sensiblement cylindrique.

21. Palier magnétique selon l'une ou plusieurs des revendications précédentes, dans lequel le ou les moyen(s) de couplage est ou sont formé(s) chacun par une structure supraconductrice, de préférence par un supraconducteur haute température.
